# EUROPEAN PATENT APPLICATION

(11) **EP 3 147 421 A1**
(43) Date of publication of application: **29.03.2017**
(21) Application number: 16002020.2
(22) Date of filing: 16.09.2016
(51) Int. Cl.: E04D 13/08

(54) **TRAP DEVICE FOR DOWNSPOUT**

(30) Priority: 22.09.2015 IT MI20155398
(71) Applicant: Contavalli, Francesco, 40024 Castel San Pietro Terme Bologna (IT)
(72) Inventor: Contavalli, Francesco, Castel SAN Pietro Terme (BO) (IT)
(74) Representative: Coppi, Cecilia

(57) **Abstract**

The trap device (1) is designed to be installed at a variable height along a downspout (2) descending from a roof gutter (3).

The trap device (1) comprises a box enclosure (10), fitted in between an upper section (2A) and a lower section (28) of the downspout (2); the inlet (11) of the lower section (2B) is situated at a higher level than the base plate (12) of the box enclosure (10), and is protected by an inverted-bucket cover (16) that forms the water trap.

Inside the box enclosure (10), rainwater is collected to form a water seal (15) that prevents the passage of malodorous gases from the drain pipe (4) underneath; the device (1) thus performs the same function as an underground water-trap sump, with equal efficacy.

## Description

The present invention falls within the technical sector of rainwater collection systems employed in buildings.

As is known, the majority of building roofs, especially if pitched, are provided with gutters to collect the rainwater that falls onto the roof and convey it into downspout pipes.

Some of these downspouts empty directly onto the ground, discharging the water there, but in urban settings this solution is no longer acceptable. Instead, the downspouts extend below ground level and lead into a drain pipe, from which the water is then discharged, for example by conveying it into a stormwater sewer.

At the point where a downspout joins this drain pipe, it is advisable to have an underground sump. These are available in various models, with or without a water trap.

Many sumps are inspectable, to facilitate maintenance and cleaning out the debris which may over time obstruct the pipes.

The primary function of a water-trap sump, compared to a normal one, is that it forms a water seal that prevents the passage of odours form the sewer, which might otherwise ascend along the downspouts and escape from the roof gutters.

New buildings in recently urbanized areas follow these criteria from the outset. However, when maintaining or renovating existing buildings, it is not always possible to install a water-trap sump below ground at the bottom of each downspout.

In most cases, the problem is not the technical difficulty or cost, but rather the regulations that may deny planning permission for underground sumps, especially in historic city centres which often have special paving materials such as cobblestones, porphyry and the like, subject to various protections.

The purpose of this invention is, accordingly, to offer a trap device for downspouts that avoids the necessity of installing the usual underground sumps, while still providing an equally effective barrier against the escape of sewer odours.

Another purpose of the invention is to provide a device that can be installed at any height along a downspout, according to need.

A further purpose of the invention Is to provide a device that can be easily inspected for maintenance and cleaning.

A further purpose of the invention is to provide a device that is compact and easy to install on pre-existing downspouts, through simple fitting operations.

Another purpose of the invention is to provide a device that is aesthetically non intrusive, and whose colour can be matched to that of the downspout on which it is installed.

These and other purposes are fully accomplished by a trap device for downspouts of the type that convey rainwater into a drain pipe situated below ground level, and which in turn empties into a stormwater sewer, where said trap device is installed along the downspout at a point above ground, so as to join two consecutive sections of the downspout, respectively the upper and the lower one, and comprises:
- a box enclosure, extending from the upper section and down to a level below the inlet of the lower section, and provided with a base-plate that encircles and seals the lower section, and where the box enclosure has the function of receiving and collecting the rainwater that flows down the upper section to create a water seal whose depth corresponds to the distance between the inlet and the base-plate;
- an inverted-bucket cover, fitted coaxially over the inlet of the lower section, arranged so that it sits higher than the inlet itself and forms a lateral casing whose lower edge is situated below the inlet and submerged inside the water seal, so that the inverted-bucket cover prevents the direct entry into the lower section of water coming down from the upper section, thereby allowing the water, collected in the water seal, to overflow into the inlet when it exceeds its established depth, and then descend through the lower section to reach the drain pipe,
where the water seal prevents the release into the atmosphere, through the drain pipe and the lower section, of harmful gases from the stormwater sewer.

The characteristics of the invention are clearly illustrated by the following description of a preferred embodiment of this trap device for downspout, according to the stated claims, and with the aid of the enclosed drawings where:
- Fig. 1 provides an overall view of a building roof gutter with a downspout on which the trap device is installed.
- Fig. 2 provides an enlarged view of the front of the trap device.
- Fig. 3 provides a view similar to Fig. 2, but with the device cover removed.
- Fig. 4 provides a further enlargement of a vertical axial cross-section of the device when in operation.
- Fig. 5 provides a perspective view of the device, in vertical cross-section.

In the above figures, the label 1 indicates the trap device for downspout, which is the subject of this invention, in its entirety.

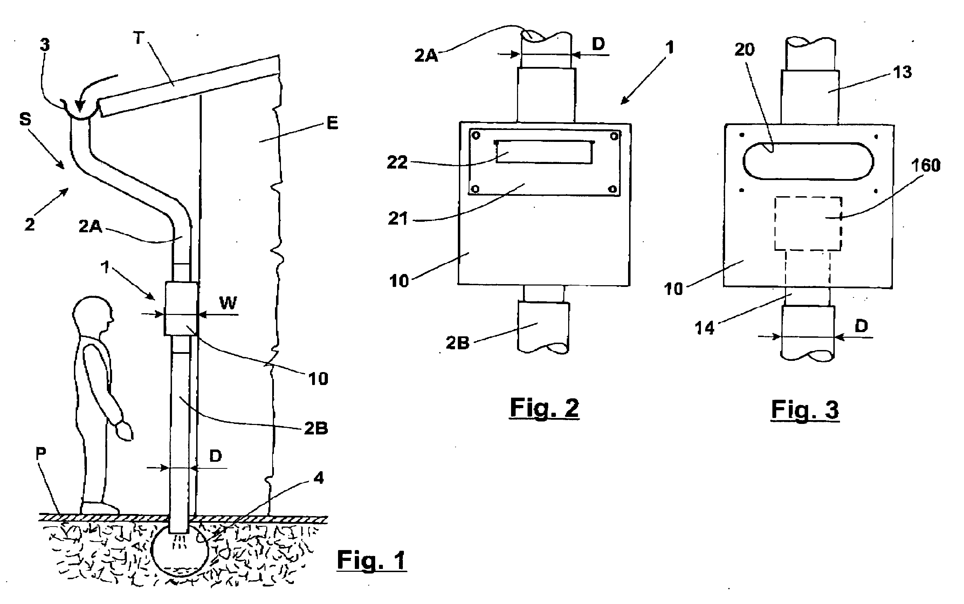

The trap device 1 is designed to be fitted onto a downspout 2, running chiefly along the vertical direction, belonging to a known system S for rainwater collection, in which a roof gutter 3 is connected to the top of the downspout 2 to convey into it the water collected from the roof T of a building E (Fig. 1).

The downspout 2 is of the type used for conveying rainwater into a drain pipe 4, situated below ground level P, and which empties, for example, into a stormwater sewer (not illustrated).

According to the invention, the device 1 can be installed along the downspout 2, at a point above the ground P, to join together two consecutive sections of the downspout, respectively the upper 2A and the lower 2B one.

The height above ground where the device 1 is installed is not fixed, and can be varied depending on the characteristics of the building E; in Fig.1, by way of non-limiting example, the device 1 is situated at human height, to facilitate inspection, as will be clarified further below, and to better protect it against impacts from persons, vehicles or other objects in the vicinity.

The aforesaid sections 2A, 2B can be made up of prefabricated elements, or obtained by cutting an existing downspout 2, and removing a segment of suitable length.

The device 1 comprises a box enclosure 10, extending from the upper section 2A and down to a level below a tubular inlet 11, which in a possible embodiment of the invention-not illustrated because it is readily deducible-consists of the final portion of the lower section 2B. The box enclosure 10 is moreover provided with a base-plate 12 that encircles and seals the aforesaid inlet 11. Moreover, the box enclosure 10 comprises, in its upper part, an opening that can accommodate a final portion of the upper section 2A, and the base-plate 12 has a lower opening that accommodates the lower section 2B.

In another possible embodiment of the device 1, not illustrated, the watertight seal between the box enclosure 10 and the sections 2A, 2B can be achieved by welding, by using silicone adhesives, or by other known methods.

In a preferred embodiment of the device 1, illustrated in the enclosed figures, the box enclosure 10 incorporates, at the point of the upper opening, a sleeve 13 extending upward from the box enclosure 10 to telescopically couple with the upper section 2A, and a second sleeve 14 that forms the inlet 11 inside the box enclosure 10, and extends downward to telescopically couple with the lower section 2B.

The enclosed figures illustrate, by way of non-limiting example, a box enclosure 10 in the shape of a parallelepiped, whose horizontal depth dimension W is slightly greater than the diameter D of sections 2A, 2B of the downspout 2, so that it rests against the corresponding wall of the building E and does not protrude outward significantly more than the downspout 2 itself.

Maintaining the same depth dimension W, it is possible to construct a box enclosure 10 of a more rounded shape (not illustrated), for example by welding previously cut sheets, or through hydroforming; this improves the aesthetics, allowing the device 1 to better blend into the architectural setting where it is installed.

The box enclosure 10 is preferably made from rust-proof metal, for example stainless steel or copper, but can also be made from moulded plastic material, which allows for even more variety with respect to shape.

The box enclosure 10 is intended to receive and collect the rainwater that flows down the upper section 2A so as to form a water seal 15 having a depth H, corresponding to the distance between the inlet 11 and the base-plate 12.

The box enclosure 10 has an inspection opening 20, situated above the water seal 15, enclosed by a removable cover 21. (Figures 2 and 3).

Through the inspection opening 20, it is possible to periodically check the interior and clean out any debris that may accumulate inside the box enclosure 10.

The removable cover 21 incorporates a swivel cover 22 (Fig. 2) horizontally hinged along the top, which covers an overflow opening underneath, that is not illustrated in detail.

The swivel cover 22 opens automatically, pushed by the water, whenever the water seal 15 rises to reach or surpass the level of the opening, thus allowing excess water to flow out and preventing the box enclosure 10 from filling completely.

In a variant that is not illustrated, the swivel cover 22, with its overflow opening underneath, are directly incorporated and built into the box enclosure 10, at a suitable position.

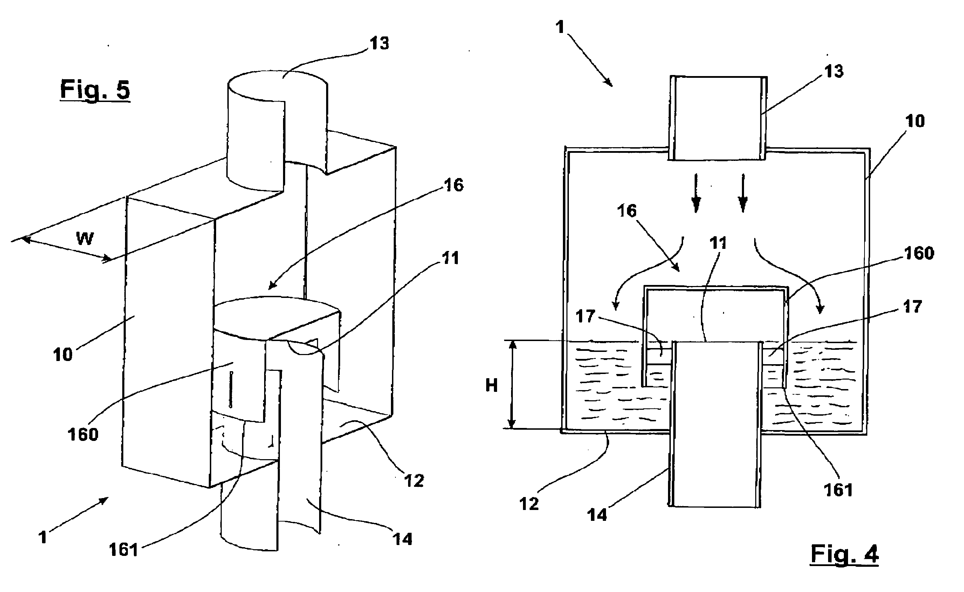

Above the inlet 11 of the second sleeve 14 (that of the lower section 2B) there is an inverted-bucket cover 16, fitted coaxially over the inlet 11 and fixed to it by means of at least two radial connectors 17 (Figures 4 and 5).

The inverted-bucket cover 16 is shaped so that it sits higher than the inlet 11 itself and forms a lateral casing 160 whose lower edge 161 is situated below the inlet 11 and submerged inside the water seal 15 (see in particular Fig. 4).

It can intuitively be seen that the inverted-bucket cover 16 prevents the direct entry into the second sleeve 14 (and hence into the lower section 2B) of water descending from the upper section 2A and allows this water, collected in the water seal 15, to overflow into the inlet 11 when it exceeds the depth H, and then descend through the lower section 2B to reach the drain pipe 4.

The lateral casing 160 has a transverse cross-section larger than the second sleeve 14 (or than the lower section 2B) and in practice forms the water trap of the device 1; its lower edge 161 is at a specified height with respect to the base-plate 12 of the box enclosure 10, such that excess water can be easily discharged even during abundant rain, to avoid overfilling of the device 1; in Figures 4 and 5 the edge is situated approximately midway along the depth H of the water seal 15.

Similarly to a water-trap pipe or the previously mentioned water-trap sump, the purpose of the water seal (15) is to prevent the release into the atmosphere, through the drain pipe 4 and the lower section 2B, of harmful gases from the stormwater sewer.

The above clearly illustrates the specific and advantageous features of the trap device, which affords the same efficacy as an underground water-trap sump, and can be easily and quickly installed in a downspout, including a pre-existing one, at the most convenient height.

The presence of an inspection opening facilitates periodic checks and cleaning which, if the device is installed at human height, can be done with great ease.

The device has a compact form, and its horizontal depth dimension is carefully sized to be compatible with the distance from the wall at which downspouts are usually placed.

The simplicity of the technical solution offers broad scope for constructing the box enclosure with an aesthetically non intrusive shape and matching its colour to that of the downspout on which it will be fitted.

In any case, the above examples are illustrative and non-limiting. Further detail variants that may be necessary for technical or functional reasons shall be considered to also fall under the protection of the below claims.

## Claims

1. Trap device for downspout for conveying rainwater into a drain pipe (4), situated below ground level (P), and leading into a stormwater sewer, where the trap device (1) is **characterised by** the fact that it is installed along the downspout (2), at a point above ground where it joins two consecutive sections of the downspout, respectively the upper (2A) and the lower (2B), and by the fact that it comprises:
- a box enclosure (10), provided with an upper opening that will accommodate, when installed, a portion of the upper section (2A) and provided with a base-plate (12) that connects to the lower section (2B) via a tubular inlet (11), extending from the base-plate (12) toward the inside of the box enclosure (10), and where the box enclosure (10) has the function of receiving and collecting the rainwater flowing down the upper section (2A) to create a water seal (15) having depth (H), corresponding to the distance between the inlet (11) and the base-plate (12);
- an inverted-bucket cover (16), fitted coaxially over the inlet (11), arranged so that it sits higher than the inlet itself (11) and forms a lateral casing (160) Whose lower edge (161) is situated below the inlet (11) and submerged inside the water seal (15), so that the inverted-bucket cover (16) prevents the direct entry into the lower section (2B) of water coming down from the upper section (2A), thereby allowing the water, collected in the water seal (15), to overflow into the inlet (11) when it exceeds the depth (H), and then descend through the lower section (2B) to reach the drain pipe (4),
where the water seal (15) prevents the release into the atmosphere, through the drain pipe (4) and the lower section (2B), of harmful gases from the stormwater sewer.

2. Trap device according to claim 1, **characterised by** the fact that the box enclosure (10) is a parallelepiped, whose horizontal depth dimension (W) is slightly greater than the diameter (D) of sections (2A, 2B) of the downspout (2).

3. Trap device according to claim 1 or 2, **characterised by** the fact that the box enclosure (10) has one sleeve (13) extending upward from the box enclosure (10) to telescopically couple with the upper section (2A), and a second sleeve (14) that forms the inlet (11) inside the box enclosure (10), and extends downward to telescopically couple with the lower section (2B).

4. Trap device according to claim 1, **characterised by** the fact that the lateral casing (160) has a transverse cross-section larger than that of the lower section (2B), and that its lowermost edge (161) is at a specified height with respect to the base-plate (12) of the box enclosure (10).

5. Trap device according to claim 1, **characterised by** the fact that the inverted-bucket cover (16) is fixed to the inlet (11) by at least two radial connectors (17).

6. Trap device according to claim 1, **characterised by** the fact that the box enclosure (10) has an overflow opening, with a swivel cover (22), horizontally hinged along the top so that it automatically opens, pushed by the water, when the water seal (15) rises above the specified depth (H) and reaches the level of the opening, thus allowing the excess water to flow out.

7. Trap device according to claim 1 or 2 or 3, **characterised by** the fact that the box enclosure (10) has an inspection opening (20) situated above the water seal (15), enclosed by a removable cover (21).

8. Trap device according to claim 6 or 7, **characterised by** the fact that that the overflow opening and its swivel cover (22) are incorporated into the removable cover (21) of the box enclosure(10).

9. Trap device according to any of the preceding claims, **characterised by** the fact that it is made from rustproof metal.

10. Trap device according to claim 1, **characterised by** the fact that the inlet (11) is made up of a final portion of the lower section (2B).
